Europäisches Patentamt

European Patent Office

Office européen des brevets

(11) Publication number: **0 156 784**
**B1**

# (12) EUROPEAN PATENT SPECIFICATION

(45) Date of publication of patent specification: 23.05.90

(21) Application number: 85850111.7

(22) Date of filing: 28.03.85

(51) Int. Cl.⁵: **C 10 L 10/00, F 23 J 7/00, B 01 D 53/34**

(54) **A method of reducing sulphur-oxide and nitrogen-oxide emission when burning solid fuel on travelling grates.**

(30) Priority: 30.03.84 SE 8401788

(43) Date of publication of application:
02.10.85 Bulletin 85/40

(45) Publication of the grant of the patent:
23.05.90 Bulletin 90/21

(84) Designated Contracting States:
AT BE DE FR GB NL SE

(56) References cited:
EP-A-0 029 564
DE-A-3 139 080
DE-C-3 330 843

POWER, June 1983, pages 97-99, edited by J.
MAKANSI; K.L. MALONEY: "Recycle flue gas to
cut emissions, improve boiler performance"

(73) Proprietor: **Norrköpings Kraft AB**
**Ö. Promenaden 3**
**S-601 81 Norrköping (SE)**

(72) Inventor: **Elofsson, Ragnar**
**Storbacken 19**
**S-603 61 Norrköping (SE)**

(74) Representative: **Omming, Allan**
**A. OMMING & CO. AB Patentbyra Kungsgatan**
**38**
**S-111 35 Stockholm (SE)**

Courier Press, Leamington Spa, England.

**Description**

The present invention relates to a method of reducing sulphur-oxide and nitrogen-oxide emission when burning fuel in a boiler provided with a mobile grate in a horizontal plane, preferably a travelling grate by supplying lime to the fuel and by recycling flue gas flowing generally vertically upwards to the combustion-air inlet.

Such a method is known, for example, from an article in POWER, June 1983, pages 97—99, which describes a coal-fired, stoker-charged boiler, in which recycled combustion gases are mixed with primary air and blown in under the stoker with the aid of a fan. This recycling of the flue gases affords a number of advantages. Among other things there is obtained a better coal and combustion-air mixture without excessive oxygen, and because the air of combustion gases contains less oxygen gas the fuel bed is also cooled. The water vapour and carbon dioxide present in the flue gas react with the coal and bind heat, thereby reducing the bed temperature of a conventional stoker-charged boiler from a normal level of about 1500°C to about 1200—1400°C. Calcium present in the coal and powdered lime mixed therewith (optionally in the form of pellets containing powdered lime) react with sulphur present in the coal during the combustion process. It is said that a 50-percent reduction in sulphur-dioxide emission is possible at a given Ca/S-mole ratio. Reduction in $NO_x$-emission is also said to be possible, in dependence on the reduced gas-oxygen content of the combustion air.

It has also been found possible, however, to reduce these emissions still further in a simple manner. As a first stage in the method according to the invention powdered lime, preferably dolomite or a similar powder containing calcium and magnesium carbonate is injected in the form of a horizontal curtain transversely to the whole flue-gas flow and at a distance above the bed which ensures that sufficient stay time is obtained for calcination and the binding of sulphur at maximum load and which, at the same time, is a level in the hearth where suitable sulphur-binding temperatures prevail, i.e. at full load 1050—1100°C. The distance must be determined after taking measurements in the boiler in question, and is normally about 1.5—2.5 m.

In accordance with a preferred embodiment of the invention, the lime or dolomite powder is suitable injected with the aid of flue-gas jets directed in the direction of grate movement and at such force that the powder curtain extends over the entire length of the grate.

It is important that the powder is injected in a manner which ensures the best possible mixing of the powder with the flue gas. The injected powder particles of calcium carbonate and magnesium carbonate are decomposed to oxides at 900°C—the level for calcium, and 800°C—the level for magnesium. Heat is lost as the powder particles decompose, and hence the particles obtain a lower temperature than the surrounding flue gas. At the temperature of 1090°C the equilibrium concentration sulphur dioxide in contact with calcium oxide in the flue gas is 75 ppm (parts per million). Practically all sulphur dioxide has been removed at 925°C.

It may be so, for different reasons, that part of the sulphur dioxide does not come into contact with the calcium oxide. In such cases residual sulphur dioxide will bind at a lower temperature to the aforesaid magnesium oxide. At a temperature of 650°C, the equilibrium concentration of sulphur dioxide in contact with magnesium oxide is 1.0 ppm, i.e. practically fully eliminated.

If possible each molecule of sulphur dioxide in the flue gas shall contact a calcium oxide molecule or magnesium oxide molecule at this temperature range, in order to achieve the best result. This mixing procedure can be effectively activated with the aid of a sound generator operating at a frequency of between 15 Hz and 85 Hz. An infrasonic generator operating at a frequency of 18 Hz is particularly effective in this respect, this generator enabling at the same time, all boiler and heat exchanger surfaces to be maintained clean from dry deposits, which are otherwise likely to occur.

As a further procedural step the underside of the grate should be regulated or controlled, when recycling flue gas, in a manner such as to ensure that the surface temperature of the bed does not exceed about 1100°C or preferably about 1000°C to any appreciable extent. Lime powder in the form of calcium carbonate is added to the coal at a mole ratio of calcium to sulphur of 1.5—3:1. During the heating process decomposition takes place to calcium oxide and carbon dioxide. This so-called calcination takes place within the temperature range 800—1100°C. The calcium carbonate sinters at higher temperatures, which must be avoided. Effective calcination is essential to the binding of sulphur and is a relatively slow reaction, and hence the temperature and the reaction time, the stay time, must not be too low. The calcium oxide reacts with the sulphur dioxide formed during the process of combustion and forms sulphate via a multistage process, resulting finally in calcium sulphate, the major part of which is stable up to 1100°C but which decomposes at higher temperatures to calcium oxide and sulphur dioxide, wherewith reduction of the sulphur content comes to nought, which must be avoided.

It is also important that the temperature of the bed is uniform over the whole extension of the bed. Consequently, in accordance with one embodiment of the invention, recycling of the flue gas is preferably effected through a plurality of individually regulatable nozzles arranged along the underside of the grate.

As a result of the uniform low bed-temperature, the reduction of sulphur oxides and nitrogen oxides is improved in relation to the previously known method.

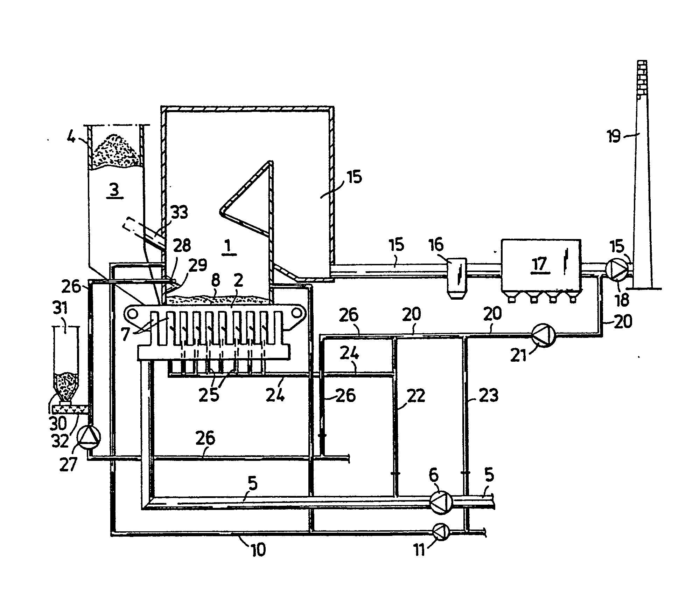

The invention will now be described more clearly with reference to the accompanying drawing, which illustrates an embodiment of a boiler system constructed for application of the method according to the invention.

The drawing illustrates a boiler 1 having a travelling grate 2 onto which coal 3, having powdered lime stone mixed therewith, is charged from a coal hopper 4. A primary-air channel 5 incorporating a primary-air fan 6 supplies primary air to a chamber 7 beneath the travelling grate 2, the primary air flowing up through the grate 2 and the bed of coal 8 lying thereupon.

A further secondary-air channel 10 incorporating a further secondary-air fan 11 is arranged to supply secondary air to the hearth of the boiler 1 above the bed 8.

A flue-gas channel 15 is arranged to conduct flue gas to a chimney or smoke stack 19, via a cyclone cleaner 16, a textile filter 17 and a flue-gas fan 18. Connected to the flue-gas channel at a location downstream of the textile filter 17 is a flue-gas recycling channel 20, through which flue-gas is recycled to the primary-air channel 5, by means of a fan 21 and via a branch channel 22, in order, inter alia, to roughly regulate the $NO_x$-emission. A further branch channel 23 is connected to the secondary-air channel 10.

A conduit 24 extends from the branch channel 22 to a plurality of upwardly directed nozzles 25 located beneath the grate 2. Each of the nozzles can be regulated individually in order to enable a uniform temperature to be achieved over the whole extension of the bed 8, both along the surface of the grate 2 and vertically within the bed.

The air and flue-gas mixture necessary for combustion and attemperating the bed 8 contains about 20% flue gas and 80% air.

Also connected to the channel 20 is a channel or pipe 26 which conducts flue gas, via a fan 27, to a plurality of nozzles 28, which are arranged to discharge into the front wall of the boiler 1 on the upper side of an igniter valve 29. The nozzles are mounted at an interspacing of about 30 cm and at a height above the grate 2 of about 2 m. The fan 27 generates in the conduit 26 a pressure of about 1200 mm water column and the nozzles are adapted to impart to the outwardly flowing flue-gas jets a velocity of about 180 m/s. The purpose of the flow of flue gas in the conduit 26 is to convey dolomite powder 30 to the nozzles 28, this powder being fed to the conduit 26 from a container 31 by means of a metering screw 32. In the case of a boiler of the order of 120 MW, about 20 tons of dolomite powder are fed each day from the container 31, which results in a considerable dolomite-powder surplus to the boiler 1. Optionally part of this surplus is recycled, if desired.

The injection velocity at the nozzles 28 is so great that the dolomite powder is projected into the hearth in the form of a horizontal curtain extending between the hearth walls, which curtain shall extend along the whole length of the grate.

For the purpose of activating the mixture of flue-gas and lime and dust particles in the hearth and the flue-gas channels out from the hearth, a sonic generator 33 is mounted in an opening in the front wall of the boiler 1. This generator is able to operate at a frequency of between 15 Hz and 85 Hz. The generator is preferably an infrasonic generator of known kind operating at the frequency 18—20 Hz and also maintains the walls of the boiler 1 and the flue-gas channel free from soot and dust particles.

Thus, it will be understood that by causing the whole of the contaminated gas flow to pass through a curtain containing highly absorbent particles of high specific surface area the gas will be cleansed far more effectively than with prior known methods and devices. When using calcium hydroxide, technical lime, the calcium hydroxide is decomposed to calcium hydroxide and water, these calcium hydroxide particles being smaller than in conventional lime sintering processes, even when using lime in the fraction 0—10 μm.

## Claims

1. A method of reducing sulphur-oxide and nitrogen-oxide emission when burning solid fuel in a boiler (1) provided with a mobile grate in a horizontal plane, preferably a travelling grate (2), by supplying lime to the fuel and by recycling flue gas, flowing generally vertically upwards to the combustion-air inlet (7, 25) beneath the grate, characterized by injecting (28) lime powder, preferably dolomite or like powder containing calcium carbonate and magnesium carbonate in the form of a horizontal curtain extending between the hearth walls of the boiler and transversely to the whole of the flue-gas flow, which curtain extends along the whole length of the grate, the injection taking place at a distance above the bed (8) such as to ensure that there is a obtained a sufficient stay time for calcination and binding of sulphur at full load.

2. A method according to Claim 1, characterized by controlling the recycling of flue gas so that the surface temperature of the bed does not exceed 1100°C or preferably 1000°C.

3. A method according to Claim 1 or Claim 2, characterized by effecting recycling of flue gas through a plurality of individually regulatable nozzles (25) distributed along the underside of the grate, and by maintaining with the aid of said nozzles the most uniform temperature distribution possible over the extension of the bed (8).

4. A method according to Claim 3, characterized by injecting the lime powder at a distance of 1.5—2.5 m above the grate surface (2).

5. A method according to any one of Claims 1—4, characterized by setting the flue-gas in the reaction area in oscillation relative to dust and lime particles with the aid of a sound generator (33) operating at a frequency of 15—85 Hz for intensifying the contact between sulphur dioxide molecules and calcium oxide molecules.

**Patentansprüche**

1. Verfahren zum Reduzieren von Schwefeloxid und Stickstoffoxidemissionen bei der Verbrennung von Festbrennstoff in einem Kessel (1), der mit einem horizontalen mobilen Rost, insbesondere mit einem Wanderrost (2) versehen ist, wobei dem Brennstoff Kalk zugeführt wird, und im wesentlichen von unten nach oben strömendes Abgas unterhalb des Rostes (2) zu einem Verbrennungslufteinlaß (7, 25) zurückgeführt wird, dadurch gekennzeichnet, daß kalkhaltiger Staub (28) insbesondere Dolomitstaub oder dergleichen, welcher Calciumcarbornat und Magnesiumcarbornat enthält, in Form eines horizontalen Vorhangs eingeblasen wird, der sich zwischen den Wänden der Feuerstelle (8) des Kessels (1) und quer zum gesamten Abgasstrom erstreckt, wobei der Vorhang sich über die gesamte Länge des Rostes (2) erstreckt, und die Zuführung mit einem solchen Abstand oberhalb des Brennstoffbettes (8) stattfindet, daß bei voller Beladung mit Sicherheit eine ausreichende Verweilzeit für die Calcinierung und Bindung des gesamten Schwefels erreicht wird.

2. Verfahren nach Anspruch 1, dadurch gekennzeichnet, daß der zurückgeführte Abgasstrom derart gesteuert und überwacht wird, daß die Oberflächentemperatur des Brennstoffbettes (8) nicht einen Wert von 1100°C oder insbesondere 1000°C überschreitet.

3. Verfahren nach Anspruch 1 oder 2, dadurch gekennzeichnet, daß die Zuführung des Abgases über mehrere unabhängig voneinander steuerbare Düsen (25) erfolgt, die entlang der Unterseite des Rostes (2) verteilt angeordnet sind, wodurch eine sehr gleichmäßige Temperaturverteilung über die Ausdehnung des Brennstoffbettes (8) ermöglicht wird.

4. Verfahren nach Anspruch 3, dadurch gekennzeichnet, daß die Zuführung des kalkhaltigen Staubes in einem Abstand von 1,5 bis 2,5 m oberhalb der Wanderrostoberfläche (2) erfolgt.

5. Verfahren nach einem der Ansprüche 1 bis 4, dadurch gekennzeichnet, daß das Abgas in der Reaktionszone in Bezug auf den Staub und die Kalkpartikel mittels eines Tongenerators (33) in Schwingungen versetzt werden, der in einem Frequenzbereich zwischen 15 und 85 Hz arbeitet, um eine Intensivierung des Kontakts zwischen den Schwefeloxidmolekülen und den Calciumoxidmolekülen zu bewirken.

**Revendications**

1. Procédé pour réduire l'émission d'oxyde de soufre et d'oxyde d'azote quand on brûle un combustible solide dans une chaudière (1) pourvue d'une grille mobile dans un plan horizontal, de préférence d'une grille mobile (2), consistant à envoyer de la chaux sur le combustible et à recycler le gaz de carneau, qui s'écoule d'une manière généralement verticale vers le haut vers l'orifice d'entrée de l'air de combustion (7, 25) en dessous de la grille, caractérisé en ce qu'il consiste à injecter (28) de la chaux en poudre, de préférence une poudre de dolomite ou une poudre analogue contenant du carbonate de calcium et du carbonate de magnésium sous forme d'un rideau horizontal s'étendant entre les parois du foyer de la chaudière et transversalement à la totalité du courant de gaz de carneau, lequel rideau s'étend le long de toute la longueur de la grille, l'injection ayant lieu à une distance, au-dessus du lit (8), permettant d'obtenir un temps de séjour suffisant pour la calcination et la fixation du soufre à pleine charge.

2. Procédé selon la revendication 1, caractérisé en ce qu'il consiste à réguler le recyclage du gaz de carneau de façon que la température superficielle du lit ne dépasse pas 1100°C, ou de préférence 1000°C.

3. Procédé selon la revendication 1 ou la revendication 2, caractérisé en ce qu'il consiste à réaliser le recyclage du gaz de carneau à travers une pluralité de buses (25) à régulation individuelle, réparties le long de la face inférieure de le grille, et à maintenir à l'aide desdites buses une répartition des températures aussi uniforme que possible sur l'étendue du lit (8).

4. Procédé selon la revendication 3, caractérisé en ce qu'il consiste à injecter la chaux en poudre à une distance de 1,5 à 2,5 m au-dessus de la surface de la grille (2).

5. Procédé selon l'une quelconque des revendications 1 à 4, caractérisé en ce qu'il consiste à mettre le gaz de carneau, dans la zone de réaction, en oscillation par rapport aux particules de poussière et de chaux, à l'aide d'un générateur sonique (33) fonctionnant à une fréquence de 15 à 85 Hz pour intensifier le contact entre les molécules d'anhydride sulfureux et d'oxyde de calcium.